# EUROPÄISCHE PATENTSCHRIFT

(11) **EP 0 714 366 B1**
(45) Veröffentlichungstag und Bekanntmachung des Hinweises auf die Patenterteilung: **12.02.1997**
(21) Anmeldenummer: 93918977.5
(22) Anmeldetag: 11.09.1993
(51) Int. Cl.: B65D 19/06, B65D 6/22, B65D 6/16

(54) **MEHRWEGVERPACKUNG**
REUSABLE PACKAGING CONTAINER
EMBALLAGE REUTILISABLE

(30) Priorität: 24.08.1993 DE 9312637 U
(43) Veröffentlichungstag der Anmeldung: 05.06.1996
(73) Patentinhaber: Bibox Mehrweg-Verpackungssysteme GmbH & Co. KG., D-69181 Leimen (DE); Canon Giessen GmbH, D-35394 Giessen (DE)
(72) Erfinder: HASDENTEUFEL, Joachim, D-56412 Daubach (DE)
(74) Vertreter: Naumann, Ulrich, Dr.-Ing.
(86) Internationale Anmeldenummer: DE9300840
(87) Internationale Veröffentlichungsnummer: WO9505978

(56) Entgegenhaltungen:
- WO-A-91/18794
- CH-A- 679 659
- DE-A- 4 111 773
- DE-B- 2 142 823
- GB-A- 2 139 983
- US-A- 4 030 600

## Beschreibung

Die Erfindung betrifft eine Mehrwegverpackung in Kistenform gemäß dem Oberbegriff des Patent Anspruchs 1.

Eine derartige Verpackung ist z.B. aus der WO-A-9 118 794 bekannt.

Der Erfindung liegt davon ausgehend die Aufgabe zugrunde, eine Mehrwegverpackung anzugeben, die erlaubt, daß die zu verpackenden Waren, insbesondere schwere Maschinen, einfach und rationell verpackt und ausgepackt werden können.

Die erfindungsgemäße Mehrwegverpackung löst die voranstehende Aufgabe durch die Merkmale des Patentanspruches 1.

Die erfindungsgemäße Mehrwegverpackung ist insbesondere für schwere Maschinen ausgelegt, die sich nicht ohne weiteres anheben und von der Palette auf Bodenniveau absenken lassen. Dafür werden meist Rampen verwendet, über die die Maschinen dann von der Palette der Mehrwegverpackung bzw. auf die Palette gerollt werden können.

Erfindungsgemäß ist erkannt worden, daß es vorteilhaft ist, wenn einer der Wandabschnitte von den übrigen Wandabschnitten lösbar ist und als Rampe verwendet werden kann, indem er nach außen klappbar ist. Dieser Wandabschnitt ist zum Zusammenlegen der Seitenwandung auch nach innen, auf die Palette klappbar. Er kann dabei entweder auch von der Palette lösbar und also abnehmbar sein oder schwenkbar, vorzugsweise über eine Scharnierverbindung an der Palette angelenkt sein. Üblicherweise wird beim Auspacken einer Maschine zunächst der Deckel der Mehrwegverpackung entfernt. Läßt sich nun ein Wandabschnitt vom Rest der Mehrwegverpackung abnehmen, so besteht bereits ein weitgehend ungehinderter Zugriff auf den Inhalt der Mehrwegverpackung.

Es gibt nun verschiedene Möglichkeiten, die erfindungsgemäße Mehrwegverpackung in vorteilhafter Weise auszugestalten und weiterzubilden.

Als Paletten können im Zusammenhang mit der erfindungsgemäßen Mehrwegverpackung handelsübliche Paletten, bspw. sog. Europaletten, verwendet werden, die eine rechteckige Grundplatte für die Mehrwegverpackung bilden. Die Seitenwandung besteht in diesem Fall aus einer Frontplatte, einer Rückwand und einer rechten und einer linken Seitenwand. Bei Paletten mit andersartigen Grundflächen, bspw. einer dreieckigen oder sechseckigen Grundfläche, können auch nur eine Seitenwand oder mehr als zwei Seitenwände vorgesehen sein. Obwohl die erfindungsgemäße Mehrwegverpackung nicht auf Verpackungen mit rechteckiger Grundplatte beschränkt ist, wird im folgenden immer von einem Quader als Grundform der Mehrwegverpackung ausgegangen.

Von besonderem Vorteil ist es, wenn die Frontplatte der Mehrwegverpackung von den angrenzenden Wandabschnitten, d.h. von der rechten und der linken Seitenwand lösbar ist und die übrigen Wandabschnitte, nämlich die Rückwand und die rechte und linke Seitenwand über Scharniere zu einem sog. Verpackungsring verbunden sind, welcher von der Palette lösbar und abnehmbar ist. Zum einen ist die Palette und ggf. die darauf befindliche zu verpackende Maschine dann frei zugänglich. Zum anderen kann der Verpackungsring unabhängig von der Palette zusammengeklappt bzw. gefaltet werden, um anschließend auf der Palette positioniert zu werden.

Die erfindungsgemäße Mehrwegverpackung läßt sich besonders kompakt zusammenfalten, wenn die Frontplatte und die Rückwand in etwa dieselbe Breitenabmessung aufweisen wie die Palette und der Deckel. Ein durch die Abmessungen einzelner Wandabschnitte bedingtes Überstehen der auf der Palette gestapelten Wandabschnitte kann jedoch in einfacher Weise auch dadurch verhindert werden, daß solche Wandabschnitte über Scharniere in sich zusammenklappbar sind. Bspw. können die Seitenwandungen parallel zu ihren Verbindungskanten zur Rückwand bzw. Frontplatte geteilt ausgebildet sein und auf diese Weise, bspw. hälftig, in sich zusammenklappbar sein. Wesentlich bei der erfindungsgemäß vorgeschlagenen Stapelung der einzelnen Wandabschnitte auf der Palette ist, daß die Wandabschnitte möglichst parallel zueinander ausgerichtet sind und somit einer gleichmäßigen großflächigen Druckbelastung ausgesetzt sind. Auf diese Weise kann eine Beschädigung der einzelnen Bestandteile der Mehrwegverpackung im zusammengefalteten Zustand weitgehend ausgeschlossen werden.

Es gibt verschiedene Möglichkeiten, die lösbare Verbindung zwischen den Wandabschnitten und der Palette zu realisieren. Als hinreichend stabil, einfach zu handhaben und besonders wartungsarm haben sich Steckverbindungen erwiesen. Die Palette kann dazu bspw. in den entsprechenden Randbereichen mit Steckleisten, wie Zahnleisten, versehen sein, die mit den entsprechenden Randbereichen der Wandabschnitte zusammenwirken.

Selbst wenn im Zusammenhang mit der erfindungsgemäßen Mehrwegverpackung immer eine standardisierte Palette, bspw. eine Europalette, verwendet wird, ist eine einfache Anpassung der Mehrwegverpackung an unterschiedliche Waren bzw. Maschinen durch eine geeignete Gestaltung des "Innenlebens" dieser Verpackung möglich. Dazu wird in einer vorteilhaften Ausgestaltung der erfindungsgemäßen Mehrwegverpackung, die als Palette ausgeführte Grundplatte mit Ausnehmungen zur Positionierung von Halterungs- und Füllelementen versehen. Unter Halterungs- und Füllelementen sind in diesem Zusammenhang bspw. Styroporteile zu verstehen, wie sie bereits auf dem Verpackungssektor bekannt sind. Diese Styroporteile dienen dazu, die verpackten Maschinen gegen Stoßeinwirkungen zu sichern und in ihrer Position in der Verpackung zu fixieren. Die Form der Styroporteile ist dazu an die äußeren Konturen der verpackten Maschine angepaßt, so daß die Styroporteile den Zwischenraum zur Verpackungsinnenwandung zumindest bereichsweise ausfüllen. Solche Halterungselemente können auch aus anderen Materialien als Styropor hergestellt sein. Je nach der Art, d.h. nach dem Gewicht und den Abmessungen der zu verpackenden Maschine, können nun spezielle Halterungslemente in die Ausnehmungen der Grundplatte eingesteckt und somit an der Innenwandung der Verpackung fixiert werden. Das Absichern der in die aufgesteckten Halterungselemente eingesetzten Maschine wird dadurch erheblich vereinfacht. Auf diese Weise läßt sich die Mehrwegverpackung für die unterschiedlichsten Maschinen verwenden.

In einer besonders vorteilhaften Ausgestaltung der erfindungsgemäßen Mehrwegverpackung ist der Deckel mit Eckwinkeln ausgestattet, die die oberen Kantenbereiche der Seitenwandung übergreifen, wenn die Mehrwegverpackung geschlossen ist. Diese Eckwinkel dienen zum einen als Positionierhilfe für den Deckel. Zum anderen wird der gesamte Verpackungsaufbau dadurch zusätzlich stabilisiert, daß die Eckwinkel in Verbindung mit dem Deckel die Stoßkanten der einzelnen Wandabschnitte der Seitenwandung übergreifen und somit zusammenhalten. Die Eckwinkel des Deckels sind außerdem so dimensioniert, daß sie auch die Kantenbereiche des aus Palette, Seitenwandung bzw. Wandabschnitten und Deckel gebildeten Stapels übergreifen. Die Eckwinkel des Deckels sichern also auch die zusammengefaltete Mehrwegverpackung gegen seitliches Herausrutschen einzelner Wandabschnitte. Sie erfüllen - wie der Deckel selbst - eine Doppelfunktion bezüglich der aufgebauten und der zusammengefalteten Mehrwegverpackung.

Bislang wurden die Grundstruktur der erfindungsgemäßen Mehrwegverpackung und deren variable Einsatzmöglichkeiten beschrieben. Diese Grundstruktur ist in einer vorteilhaften Weiterbildung durch einen Aufsatz erweiterbar bzw. verlängerbar und erhöhbar, der aus den Wandabschnitten der Seitenwandung entsprechenden Wandabschnitten besteht. Die Wandabschnitte des Aufsatzes sind auf die entsprechenden Wandabschnitte der Seitenwandung aufsetzbar, und zwar vorzugsweise einzeln.

Sowohl im Zusammenhang mit der Grundstruktur der erfindungsgemäßen Mehrwegverpackung als auch mit der Ergänzung der erfindungsgemäßen Mehrwegverpackung durch einen Aufsatz werden von den angrenzenden Wandabschnitten lösbare Wandabschnitte verwendet. Solchermaßen lösbare Verbindungen können in unterschiedlicher Weise realisiert werden. Besonders vorteilhaft ist die Verwendung von Verbindungselementen, wie sie bereits in der deutschen Patentanmeldung P 41 01 486.3-25 beschrieben sind. Den Randbereichen der lösbar miteinander verbundenen Wandabschnitte ist dann jeweils mindestens ein solches Verbindungselement zugeordnet, wobei die Verbindungselemente der einzelnen Wandabschnite paarweise in Eingriff bringbar und vorzugsweise durch Längsverschiebung gegeneinander verrastbar sind. Aus Stabilitätsgründen ist es von Vorteil, wenn die Verbindungselemente sich jeweils kontinuierlich entlang der gesamten Verbindungskante der jeweiligen Wandabschnitte erstrecken. Dadurch wird nicht nur die Festigkeit der Verbindung selbst möglichst groß, sondern auch die Stabilität der gesamten Mehrwegverpackung gegen äußere Einflüsse, z.B. Stoßbelastungen. Die Verbindungslemente der jeweils miteinander verbundenen Wandabschnitte bilden dann nämlich eine verstärkte Kante, die den erhöhten Beanspruchungen, denen die Kanten einer solchen Mehrwegverpackung erfahrungsgemäß ausgesetzt sind, besser standhält. Die Stabilität kann auch durch die Wahl eines geeigneten Materials für die Verbindungselemente erhöht werden. Als Materialien kommen insbesondere Metall, also Stahlblechverbindungselemente, oder auch Kunststoff in Frage. Das Material der Verbindungselemente wird in der Regel auch in Abhängigkeit vom Material der Wandabschnitte gewählt.

In einer vorteilhaften Ausgestaltung weisen die Verbindungselemente für die Wandabschnitte des Aufsatzes über die Wandabschnitte hinausragende Verlängerungen auf, die zum Aufstecken des Aufsatzes auf die oberen Kantenbereiche der Seitenwandung dienen. Der Aufsatz wird auf diese Weise in den konstruktionsbedingt günstigen Eckbereichen der Seitenwandung fixiert.

Um ein ungewolltes Lösen einzelner Wandabschnitte aus dem Verband der erfindungsgemäßen Mehrwegverpackung zu verhindern, wird eine Sperreinrichtung für die Verbindungselemente vorgeschlagen, die mindestens ein betätigbares Riegelelement umfaßt. Dieses Riegelelement ist vorzugsweise manuell in eine Sperrposition bringbar, in der es zwei miteinander in Eingriff stehende Verbindungselemente zumindest teilweise durchdringt und auf diese Weise ein unkontrolliertes Lösen des Eingriffs der Verbindungselemente verhindert. Eine solche Sperreinrichtung könnte bspw. entsprechend der deutschen Patentanmeldung P 42 34 465.4-12 ausgestaltet sein.

Aus Gründen der Übersichtlichkeit kann es bei einer erfindungsgemäßen, um einen Aufsatz ergänzten Mehrwegverpackung von Vorteil sein, wenn zwischen der eigentlichen Seitenwandung und dem Aufsatz ein Zwischenboden angeordnet ist, der das Gesamtvolumen der Mehrwegverpackung unterteilt. Im unteren Bereich könnte bspw. eine Maschine angeordnet sein, deren Zubehör im oberen Bereich der Verpackung, auf dem Zwischenboden angeordnet sein könnte. Dazu sind zwei Haltevorrichtungen für den Zwischenboden im oberen Randbereich der Seitenwandung erforderlich, die vorzugsweise einander gegenüberliegend angeordnet sind. Im folgenden wird eine besonders vorteilhafte Haltevorrichtung vorgeschlagen, die neben der Funktion als Halterung für einen Zwischenboden auch einer zusätzlichen Stabilisierung des Aufsatzes auf der Seitenwandung dient. Diese Haltevorrichtung umfaßt ein im wesentlichen als H-Profil ausgebildetes Schienenelement und mindestens ein Halteelement für den Zwischenboden. Der obere Randbereich der Seitenwandung einerseits und der zugeordnete Randbereich des Aufsatzes andererseits sind in das H-Profil eingeschoben. Das H-Profil stellt also eine zusätzliche Fixierung des Aufsatzes auf der Seitenwandung dar. Außerdem weist das als H-Profil ausgebildete Schienenelement mindestens einen Eingriffsbereich für das Halteelement auf, welches in diesem Eingriffsbereich auch festlegbar ist. Besonders vorteilhaft ist es, wenn das Halteelement lediglich als Auflagefläche für den Zwischenboden ausgeführt ist, da der Zwischenboden dann besonders einfach wahlweise eingelegt oder auch herausgenommen werden kann. Eine Haltevorrichtung, dieser Art ist bereits in der deutschen Patentanmeldung P 43 27 351.3 beschrieben, auf die an dieser Stelle ausdrücklich Bezug genommen werden soll.

Wie bereits voranstehend erwähnt, ist zur Anpassung an den Verwendungszweck der hier beschriebenen Mehrwegverpackung für schwere Maschinen vorgesehen, daß einer der Wandabschnitte als Rampe zum Be- und Entladen der Palette verwendet werden kann. Dafür kommen auch Wandabschnitte des Aufsatzes in Frage.

Besonders vorteilhaft ist es, wenn die Wandabschnitte des Aufsatzes und ggf. der Zwischenboden ebenfalls in den Stapel der zusammengefalteten Mehrwegverpackung integrierbar sind.

Abschließend sei noch auf einige Einzelaspekte hingewiesen, die eine mehrfache Verwendung der erfindungsgemäß vorgeschlagenen Mehrwegverpackung begünstigen. So ist es vorteilhaft, wenn zumindest einer der Wandabschnitte mit einem Etikettenrahmen versehen ist, der mit auswechselbaren Informationsträgern zur Kennzeichnung des Verpackungsinhalts bestückt werden kann. Als besonders robustes Material für die Einzelteile der hier vorgeschlagenen Mehrwegverpackung bietet sich Holz, Kunststoff oder auch Metall an. Die einzelnen Wandabschnitte sowie der Deckel und ggf. der Zwischenboden können je nach Bedarf auch aus wärmeisolierendem oder geräuschdämmendem Material gebildet sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung zweier Ausfürungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltlungen und Weiterbildungen der Lehre erläutert. In der Zeichnung zeigen
- Fig. 1A bis 1G: eine Aufsicht und alle vier Seitenansichten einer erfindungsgemäßen Mehrwegverpackung in aufgebautem Zustand sowie zwei Seitenansichten dieser Mehrwegverpackung in zusammengefaltetem Zustand,
- Fig. 2A bis 2E: eine Aufsicht und alle vier Seitenansichten eines Verpackungsrings sowie eine Seitenansicht dieses Verpackungsringes in zusammengefaltetem Zustand und
- Fig. 3: eine Seitenansicht einer erfindungsgemäßen Mehrwegverpackung mit einem Aufsatz.

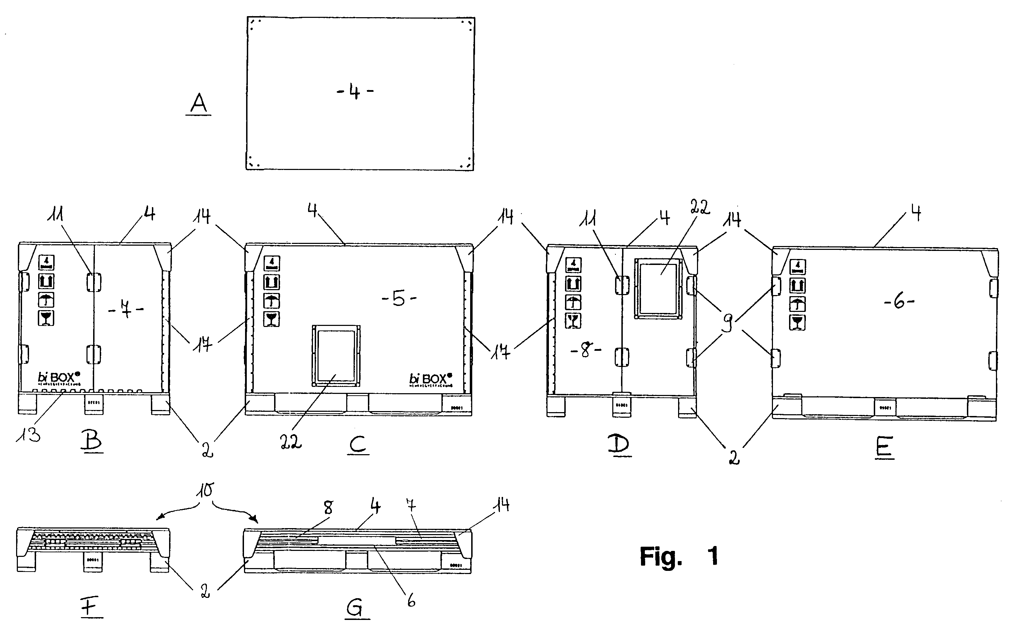

Die Fig. 1A bis 1G zeigen eine Mehrwegverpackung in Kistenform, die vorzugsweise für schwere Maschinen, insbesondere Büromaschinen, verwendet wird. Die Mehrwegverpackung umfaßt eine Grundplatte 2, eine aus mehreren Wandabschnitten 5 bis 8 bestehende Seitenwandung und einen abnehmbaren und auf die Seitenwandung aufsetzbaren Deckel 4.

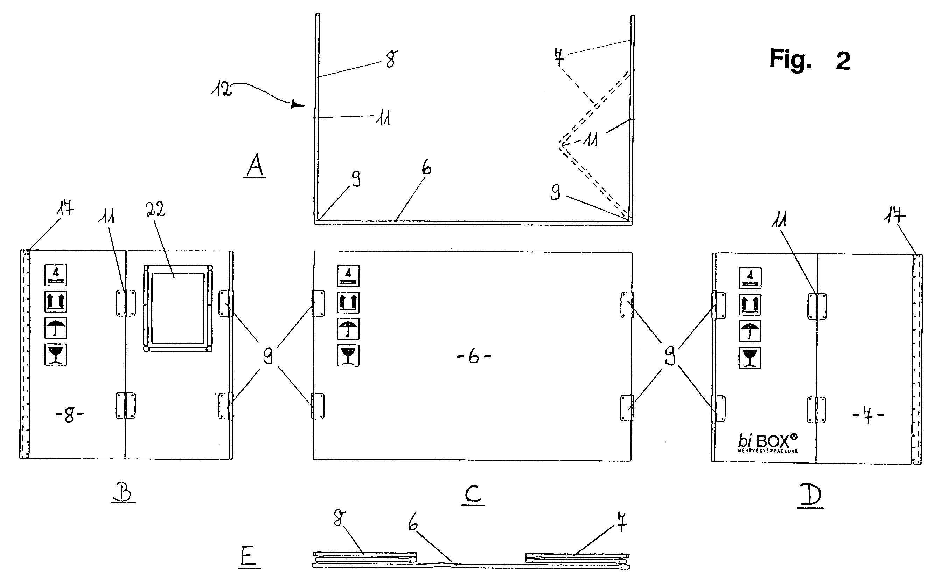

Die Grundplatte ist als Palette 2 ausgeführt. Es kann sich dabei um speziell angefertigte Paletten handeln, oder auch um standardisierte Europaletten. Zumindest zwei der Wandabschnitte sind über Scharniere 9 miteinander verbunden und komplett von der Palette 2 lösbar. In dem hier dargestellten Ausführungsbeispiel handelt es sich um die Wandabschnitte 6, 7 und 8. Die gesamte Seitenwandung ist zusammenlegbar und zusammen mit dem Deckel 4 auf der Palette 2 stapelbar, wobei der Deckel 4 den oberen Abschluß des so erstellten Stapels 10 bildet. Dieser Stapel 10 ist in unterschiedlichen Seitenansichten jeweils in den Fig. 1F und 1G dargestellt. Die einzelnen Schichten des Stapels 10 werden im Zusammenhang mit der Beschreibung der Fig. 2A bis 2E näher erläutert.

Bei der in den Fig. 1A bis Fig. 1G dargestellten Mehrwegverpackung handelt es sich um einen quaderförmigen Container, der eine Frontplatte 5, eine Rückwand 6 und eine rechte und eine linke Seitenwand 7 und 8 als Seitenwandung umfaßt. Die Frontplatte 5 ist von den angrenzenden Seitenwänden 7 und 8 und auch von der Palette 2 lösbar. D.h., daß die Frontplatte 5 nach dem Abheben des Deckels 4 vollständig abgenommen werden kann. Der Inhalt der Mehrwegverpackung ist dann also zumindest von der Vorderseite her frei zugänglich. Die Rückwand 6 ist über Scharniere 9 mit der rechten und der linken Seitenwand 7 und 8 zum sog. Verpackungsring 12 (Fig. 2A bis 2E) verbunden, welcher komplett, d.h. zusammenhängend, von der Palette 2 lösbar, also ebenfalls abnehmbar ist.

Im Gegensatz zur Frontplatte 5 und zur Rückwand 6 sind die Seitenwände 7 und 8 nicht einstückig ausgebildet, sondern in zwei Teilstücken, die über Scharniere 11 miteinander verbunden sind, so daß die Seitenwände 7 und 8 in sich zusammenklappbar sind. Aus Fig. 1B geht hervor, daß die Seitenwand 7 über eine im Randbereich der Palette 2 angeordnete Speckleiste 13 auf die Palette 2 aufgesteckt ist. Die lösbare Verbindung zwischen der Seitenwand 8 und der Palette 2 ist also - wie auch die übrigen lösbaren Verbindungen zwischen Wandabschnitten 5 bis 8 und der Palette 2 - über eine Steckverbindung realisiert.

Der Deckel 4 ist mit Eckwinkeln 14 ausgestattet, die für den Fall, daß die Mehrwegverpackung aufgebaut ist, über die oberen Kantenbereiche der Seitenwandung greifen. Im Falle, daß die Mehrwegverpackung zusammengefaltet ist, übergreifen die Eckwinkel 14 des Deckels 4 zumindest die Kantenbereiche des Stapels 10.

Angemerkt sie an dieser Stelle noch, daß die Frontplatte 5 und die Rückwand 6 in etwa dieselben Abmessungen aufweisen wie die Palette 2 und der Deckel 4.
Die lösbare Verbindung der Frontplatte 5 zu den Seitenwänden 7 und 8 ist mit Hilfe von Verbindungselementen 17 hergestellt, die in den jeweils einander zugewandten Randbereichen der Seitenwände 7 und 8 und der Frontplatte 5 angeordnet sind. Durch paarweises in Eingriff bringen dieser Verbindungselemente 17 und durch Längsverschiebung der Verbindungselemente 17 gegeneinander verrasten die Verbindungselemente 17. Die Verbindungselemente 17 erstrecken sich kontinuierlich entlang der gesamten Verbindungskante und bilden eine Außenkante der Mehrwegverpackung.

Im Zusammenhang mit den Fig. 1C und 1D sei noch auf Etikettrahmen 22 hingewiesen, die auf der Frontplatte 5 und der Seitenwand 8 angeordnet sind und durch wahlweises Einstecken von Informationsträgern eine variable Kennzeichnung des Verpackungsinhalts ermöglichen.

Anhand der Fig. 2A bis Fig. 2E soll nun eine spezielle Faltungsmöglichkeit der Seitenwandung erläutert werden. Fig. 2A zeigt eine Aufsicht des sog. Verpackungsrings 12, der aus der Rückwand 6 und der linken und rechten Seitenwand 7 und 8 besteht. Aus dieser Darstellung wird nochmals deutlich, daß die Seitenwände 7 und 8 jeweils zweiteilig ausgebildet sind, wobei die beiden Einzelteile über Scharniere 11 miteinander verbunden sind. Die Seitenwände 7 und 8 sind über Scharniere 9 an die Rückwand 6 angelenkt. Die gestrichelte Darstellung der Seitenwand 7 zeigt die durch die Scharniere 9 und 11 bedingten Abknickmöglichkeiten der Seitenwände 7 und 8. Die mit der Rückwand 6 verbundene Hälfte der Seitenwand 7 wird auf die Rückwand 6 geklappt, während die andere Hälfte der Seitenwand 8 auf die erste Hälfte geklappt wird. Die Zusammensetzung des Verpackungsrings 12 wird nochmals durch die Zusammenschau der Fig. 2B bis Fig. 2D verdeutlicht. Besonders hingewiesen sei nochmals auf die Anordnung der Scharniere 9 als Verbindung der Seitenwände 7 und 8 mit der Rückwand 6 und der Scharniere 11 als Verbindung der Einzelteile der Seitenwände 7 und 8. Außerdem sind hier auch nochmals die mit der Frontplatte 5 zusammenwirkenden Verbindungselemente 17 dargestellt. Fig. 2E zeigt schließlich eine der Fig. 2A entsprechende Aufsicht des Verpackungsringes 12 in zusammengefaltetem Zustand, wobei die Seitenwände entsprechend der gestrichelten Darstellung in Fig. 2A auf die Rückwand 6 geklappt sind.

Unter Zugrundelegung der Erläuterungen zu den Fig. 2A bis Fig. 2E soll nun der Aufbau des in den Fig. 1F und 1G dargestellten Stapels 10 erläutert werden. Die Grundlage des Stapels 10 bildet die Palette 2. Auf diese ist der Verpackungsring 12 in der in Fig. 2E dargestellten Weise gelegt, d.h. mit der Rückwand 6 nach unten und den beiden eingeklappten Seitenwandungen 7 und 8 auf der Rückwand 6. Den Abschluß bildet der Deckel 4, dessen Eckwinkel 14 so dimensioniert sind, daß sie die Kantenbereiche des Stapels 10 weitgehend übergreifen. Dadurch wird ein Herausrutschen der einzelnen Bestandteile des Stapels 10 verhindert.

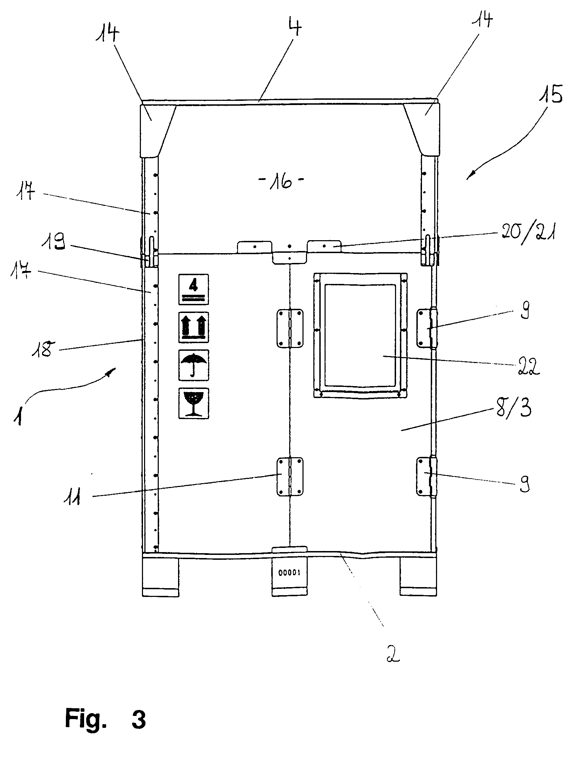

Fig. 3 zeigt eine Mehrwegverpackung 1, die in ihren Grundbestandteilen der in den Fig. 1 und 2 dargestellten Mehrwegverpackung 1 entspricht. Die in Fig. 3 dargestellte Mehrwegverpackung ist lediglich durch einen Aufsatz 15 ergänzt, der aus mehreren den Wandabschnitten 5 bis 8 der Seitenwandung 3 entsprechenden Wandabschnitten 16 gebildet ist. Die Wandabschnitte 16 des Aufsatzes 5 sind lösbar miteinander verbunden, und zwar über Verbindungselemente 17 wie sie bereits im Zusammenhang mit der Frontplatte und den Seitenwänden 7 und 8 beschrieben wurden. Die Verbindungselemente 17 der Wandabschnitte 16 des Aufsatzes 15 weisen jedoch als Besonderheit eine Verlängerung 19 auf, die über die Wandabschnitte 16 hinausragt und auf die oberen Kantenbereiche der Seitenwandung 3 aufsteckbar ist. Auf diese Weise wird der Aufsatz 15 auf der Seitenwandung 3 befestigt. In Fig. 3 ist ferner eine Haltevorrichtung 20 dargestellt, die zwischen der Seitenwandung 3 und dem Aufsatz 15 angeordnet ist. Die Haltevorrichtung 20 umfaßt ein als H-Profil ausgebildetes Schienenelement 21. In das H-Profil ist einerseits der obere Randbereich der Seitenwandung 3 und andererseits der zugeordnete Randbereich des Aufsatzes 15 eingeschoben, wodurch die Verbindung zwischen dem Aufsatz 15 und der Seitenwandung 3 stabilisiert wird. Das Schienenelement 21 dient in erster Linie als Bestandteil einer Haltevorrichtung 20 für einen Zwischenboden und umfaßt in diesem Falle ein Halteelement, das in einem Eingriffsbereich des Schienenelements 21 festlegbar ist. Mit Hilfe eines solchen Zwischenbodens könnte das Gesamtvolumen des in Fig. 3 dargestellten Containers unterteilt werden.

Schließlich sei noch darauf hingewiesen, daß der Deckel 4 mit den Eckwinkeln 14 genauso wie auf die Seitenwandung 3 auch auf den Aufsatz 15 aufgesetzt wird.

In Verbindung mit den Stapeldarstellungen der Fig. 1F und 1G sei noch darauf hingewiesen, daß dieser Stapel 10 in vorteilhafter Weise durch ein um den Stapelaufbau gelegtes Umreifungsband, welches normalerweise auch zur Sicherung der aufgebauten Mehrwegverpackung benutzt wird, fixiert werden kann.

Bezüglich weiterer, in den Fig. nicht dargestellter Merkmale der erfindungsgemäßen Mehrwegverpackung wird auf den allgemeinen Teil der Beschreibung verwiesen.

Abschließend sei darauf hingewiesen, daß die erfindungsgemäße Lehre nicht auf die voranstehend erörterten Ausführungsbeispiele beschränkt ist. Die erfindungsgemäße Lehre läßt sich vielmehr auch bei anders ausgestalteten Mehrwegverpackungen, bspw. bei Mehrwegverpackungen mit vieleckiger Grundfläche oder durch weitere Bestandteile ergänzte Mehrwegverpackungen realisieren.

## Patentansprüche

1. Mehrwegverpackung in Kistenform, vorzugsweise für Maschinen, insbesondere Büromaschinen, mit einer als Palette ausgeführten Grundplatte (2), einer aus mehreren Wandabschnitten (5 bis 8) bestehenden Seitenwandung (3) und einem abnehmbaren und auf die Seitenwandung aufsetzbaren Deckel (4), wobei mindestens zwei über Scharniere (9) verbundene Wandabschnitte (5 bis 8) komplett von der Grundplatte (2) lösbar sind und die gesamte Seitenwandung (3) zusammenlegbar und zusammen mit dem Deckel (4) auf der Grundplatte (2) stapelbar ist, so daß der Deckel (4) den oberen Abschluß des so erstellten Stapels (10) bildet,
**dadurch gekennzeichnet,**
daß mindestens einer der Wandabschnitte (5) von den übrigen Wandabschnitten (6 bis 8) lösbar ist und daß der von den übrigen Wandabschnitten lösbare Wandabschnitt schwenkbar, vorzugsweise über eine Scharnierverbindung, an der Palette angelenkt ist, so daß er alternativ rampenartig nach außen oder auf die Palette nach innen klappbar ist.

2. Mehrwegverpackung nach Anspruch 1, dadurch gekennzeichnet, daß der von den übrigen Wandabschnitten (6 bis 8) lösbare Wandabschnitt (5) auch von der Palette (2) lösbar und also abnehmbar ist.

3. Mehrwegverpackung nach einem der Ansprüche 1 oder 2, dadurch gekennzeichnet, daß zumindest ein Teil der Wandabschnitte (7, 8) über Scharniere (11) zusammenklappbar ist.

4. Mehrwegverpackung nach einem der Ansprüche 1 bis 3, dadurch gekennzeichnet, daß als Wandabschnitte eine Frontplatte (5), eine Rückwand (6) und mindestens eine Seitenwand, vorzugsweise eine rechte und eine linke Seitenwand (7, 8), vorgesehen sind, wobei die Frontplatte (5) von den angrenzenden Wandabschnitten (7, 8) lösbar ist und die Rückwand (6) über Scharniere (9) mit der Seitenwand, vorzugsweise mit der rechten und der linken Seitenwand (7, 8), verbunden ist und als Verpackungsring (12) komplett von der Palette (2) lösbar und abnehmbar ist.

5. Mehrwegverpackung nach Anspruch 4, dadurch gekennzeichnet, daß die Frontplatte (5) und die Rückwand (6) in etwa dieselbe Breitenabmessung haben wie die Palette (2) und der Deckel (4).

6. Mehrwegverpackung nach Anspruch 4 oder 5, dadurch gekennzeichnet, daß die Seitenwand (7, 8) über Scharniere (11) zusammenklappbar ist.

7. Mehrwegverpackung nach einem der Ansprüche 1 bis 6, dadurch gekennzeichnet, daß eine lösbare Verbindung zwischen den Wandabschnitten (5 bis 8) und der Palette (2) als Steckverbindung realisiert ist, wobei die Palette (2) in den zur lösbaren Verbindung mit den Wandabschnitten (5 bis 8) vorgesehenen Randbereichen mit Steckleisten (13), vorzugsweise Zahnleisten, versehen ist, die mit den entsprechenden Randbereichen der Wandabschnitte (5 bis 8) zusammenwirken.

8. Mehrwegverpackung nach einem der Ansprüche 1 bis 7, dadurch gekennzeichnet, daß die als Palette ausgeführte Grundplatte mit Ausnehmungen zur Positionierung von Halterungs- und Füllelementen versehen ist, wobei ggf. unterschiedliche, in Abhängigkeit von der zu verpackenden Maschine dimensionierte Halterungs- und Füllelemente, vorzugsweise aus Styropor, in die Ausnehmungen der Grundplatte einsteckbar sind.

9. Mehrwegverpackung nach einem der Ansprüche 1 bis 8, dadurch gekennzeichnet, daß der Deckel (4) mit die oberen Kantenbereiche der Seitenwandung (3) übergreifenden Eckwinkeln (14) ausgestattet ist und daß die Eckwinkel (14) des Deckels (4) so dimensioniert sind, daß sie die Kantenbereiche des aus Palette (2), Seitenwandung (3) bzw. Wandabschnitten (5 bis 8) und Deckel (4) gebildeten Stapels (10) zumindest weitgehend übergreifen.

10. Mehrwegverpackung nach einem der Ansprüche 1 bis 9, dadurch gekennzeichnet, daß die Seitenwandung (3) mit Hilfe eines aus entsprechenden Wandabschnitten (16) bestehenden Aufsatzes (15) verlängerbar bzw. erhöhbar ist und daß die Wandabschnitte (16) des Aufsatzes (15) vorzugsweise einzeln auf die Seitenwandung (3) aufsetzbar sind.

11. Mehrwegverpackung nach einem der Ansprüche 1 bis 10, dadurch gekennzeichnet, daß den Randbereichen der lösbar miteinander verbundenen Wandabschnitte (5, 7, 8; 16) jeweils mindestens ein Verbindungselement (17) zugeordnet ist und daß die Verbindungselemente (17) der einzelnen Wandabschnitte (5, 7, 8; 16) paarweise in Eingriff bringbar und vorzugsweise durch Längsverschiebung gegeneinander verrastbar sind.

12. Mehrwegverpackung nach Anspruch 11, dadurch gekennzeichnet, daß sich das Verbindungselement (17) kontinuierlich entlang der gesamten Verbindungskante des jeweiligen Wandabschnitts (5, 7, 8; 16) erstreckt, wobei die Verbindungselemente (17) der jeweils miteinander verbundenen Wandabschnitte (5, 7, 8; 16) eine Kante (18) bilden.

13. Mehrwegverpackung nach einem der Ansprüche 10 bis 12, dadurch gekennzeichnet, daß die den Wandabschnitten (16) des Aufsatzes (15) zugeordneten Verbindungselemente (17) über die Wandabschnitte (16) hinausragende Verlängerungen (19) aufweisen, so daß die Wandabschnitte (16) des Aufsatzes (15) mit den zugeordneten Verbindungselementen (17) bzw. den entsprechenden Verlängerungen (19) auf die oberen Kantenbereiche der Seitenwandung (3) aufsteckbar sind.

14. Mehrwegverpackung nach einem der Ansprüche 10 bis 12, dadurch gekennzeichnet, daß jeder lösbaren Verbindung zwischen zwei benachbarten Wandabschnitten mindestens eine vorzugsweise manuell betätigbare Sperreinrichtung zugeordnet ist.

15. Mehrwegverpackung nach Anspruch 14, dadurch gekennzeichnet, daß die Sperreinrichtung mindestens ein betätigbares Riegelelement umfaßt und daß das Riegelelement in eine Sperrposition bringbar ist, in der es zwei miteinander in Eingriff stehende Verbindungselemente zumindest teilweise durchdringt und auf diese Weise ein Lösen des Eingriffs der Verbindungselemente verhindert.

16. Mehrwegverpackung nach einem der Ansprüche 9 bis 15, dadurch gekennzeichnet, daß ein Zwischenboden zum Abschluß des von der Seitenwandung umfaßten Volumens gegen das vom Aufsatz umfaßte Volumen einsetzbar ist, wobei mindestens zwei Haltevorrichtungen (20) für den Zwischenboden im oberen Randbereich der Seitenwandung (3) vorzugsweise einander gegenüberliegend, angeordnet sind.

17. Mehrwegverpackung nach Anspruch 16, dadurch gekennzeichnet, daß die Haltevorrichtung (20) ein im wesentlichen als H-Profil ausgebildetes Schienenelement (21) und mindestens ein Halteelement für den Zwischenboden umfaßt, wobei der obere Randbereich der Seitenwandung (3) einerseits und der zugeordnete Randbereich des Aufsatzes (15)andererseits in das H-Profil eingeschoben sind, und daß das Schienenelement (21) mindestens einen Eingriffsbereich für das Halteelement aufweist, wobei das Halteelement im Eingriffsbereich des Schienenelements (21) festlegbar und als Auflagefläche für den Zwischenboden ausgeführt ist.

18. Mehrwegverpackung nach einem der Ansprüche 9 bis 17, dadurch gekennzeichnet, daß mindestens ein Wandabschnitt des Aufsatzes oder ggf. der Zwischenboden an einen Randbereich der als Grundplatte ausgeführten Palette koppelbar und als Be- bzw. Entladerampe verwendbar ist.

19. Mehrwegverpackung nach einem der Ansprüche 9 bis 18, dadurch gekennzeichnet, daß die Wandabschnitte des Aufsatzes und ggf. der Zwischenboden zusammenlegbar und zusammen mit der Seitenwandung und dem Deckel auf der Palette stapelbar sind, wobei der Deckel den oberen Abschluß des Stapels bildet.

20. Mehrwegverpackung nach einem der Ansprüche 1 bis 19, dadurch gekennzeichnet, daß zumindest einer der Wandabschnitte (5 bis 8; 16) mit einem Etikettenrahmen (22) versehen ist und daß die Palette, die Wandabschnitte, ggf. der Zwischenboden und der Deckel aus Holz, Kunststoff oder Metall hergestellt sind und ggf. wärmeisolierende und/oder geräuschdämmende Eigenschaften aufweist.

## Claims

1. Reusable packaging container in box form, preferably for machines, in particular office machines, with a base (2) formed as a pallet, a side wall (3) consisting of a plurality of wall sections (5 to 8) and a lid (4) which can be removed and mounted on the side wall, wherein at least two wall sections (5 to 8) connected via hinges (9) can be detached as a whole from the base plate (2) and the whole side wall (3) can be folded together and stacked, together with the lid (4), on the base plate (2) such that the lid (4) forms the upper closure of the stack (10) which is formed in this manner;
characterised in that at least one of the wall sections (5) is detachable from the remaining wall sections (6 and 8) and in that the wall section which is detachable from the remaining wall sections is pivotally disposed, preferably via a hinge connection, on the pallet such that it can be folded, as desired, in a ramp-like manner, towards the exterior or onto the pallet towards the interior.

2. Reusable packaging container according to Claim 1, characterised in that the wall section (5) which is detachable from the other wall sections (6 to 8) can also be detached from the pallet (2) and is thus removable.

3. Reusable packaging container according to Claim 1 or Claim 2, characterised in that at least one part of the wall sections (7,8) can be folded together via hinges.

4. Reusable packing container according to Claims 1 to 3, characterised in that a front panel (5), a rear wall (6) and at least one side wall, preferably a right side wall and a left side wall (7,8) are provided, the front panel (5) being detachable from the abutting side walls (7,8) and the rear wall (6) being connected via hinges (9) to the side walls, preferably to the right and the left side wall (7,8) and the packaging surround (12) is detachable and removable from the pallet (2) as a whole.

5. Reusable packaging container according to Claim 4, characterised in that the front panel (5) and the rear wall (6) are approximately the same width as the pallet (2) and the lid (4).

6. Reusable packaging container according to Claim 4 or 5, characterised in that the side walls (7,8) can be folded together via hinges (11).

7. Reusable packaging container according to any one of Claims 1 to 6, characterised in that a detachable connection is produced between the wall sections (5 to 8) and the pallet (2) is produced in the form of a plug-in connection, wherein the pallet (2) is provided, in the edge areas which are provided for the detachable connection with the wall sections (5 and 8), with contact strips (13), preferably serrated slats, which cooperate with the corresponding edge areas of the wall sections (5 and 8).

8. Reusable packaging container according to any one of Claims 1 to 7, characterised in that the base, which is formed as a pallet, is provided with recesses for the positioning of retaining and filling elements, wherein various retaining and filling elements, the dimensions of which are dependent on the machine which is to be packed and preferably made of styropor^{(tm)}, may be plugged into the recesses of the base.

9. Reusable packaging container according to any one of Claims 1 to 8, characterised in that the lid (4) is equipped with corner angle brackets (14) which engage over the upper border areas of the side wall (3) and in that the corner angle brackets (14) of the lid (4) are dimensioned such that they engage, at least substantially, over the edge areas of the stack (10) which consists of the pallet (2), side walls (3) or wall sections (5 to 8) and lid (4).

10. Reusable packaging container according to any one of Claims 1 to 9, characterised in that the side wall (3) could be extended or raised with the aid of a extension piece (15) made of corresponding wall sections (16) and in that the wall sections (16) of the extension piece (15) can advantageously be mounted individually on the side wall (3).

11. Reusable packaging container according to any one of Claims 1 to 10, characterised in that at least one connection element (17) is allocated in each case to the edge areas of wall sections (5,7,8;16) which are detachably connected to one another and in that the connection elements (17) of the individual wall sections (5,7,8;16) can be brought into engagement with one another in pairs and can preferably be brought into engagement with one another by means of longitudinal displacement.

12. Reusable packaging container according to Claim 11, characterised in that the connection element (17) extends continually along the entire connection edge of the wall section (5,7,8;16), wherein the connection elements (17) of the wall sections (5,7,8;16) which are connected to one another in each case form an edge (18).

13. Reusable packaging container according to any one of Claims 10 to 12, characterised in that the connection elements (17) which are allocated to the wall sections (16) of the extension part (15) comprise extensions which project beyond the wall sections (16), such that the wall sections (16) of the extension part (15) can be plugged onto the upper edge areas of the side wall (3) by means of the associated connection elements (17) or the corresponding extensions (19).

14. Reusable packaging container according to any one of Claims 10 to 12, characterised in that a locking device, which may be actuated manually, is allocated to each detachable connection between two adjacent wall sections.

15. Reusable packaging container according to Claim 14, characterised in that the locking device comprises at least one manually actuable locking element and in that the locking element can be brought into a locking position, in that it penetrates, at least partially, two connection elements which are in engagement with one another and, in this manner, prevents a loosening of the engagement of the connection elements.

16. Reusable packaging container according to any one of Claims 9 to 15, characterised in that an intermediate base can be used to close the volume delimited by the side wall, wherein at least two retaining devices (20) for the intermediate base are disposed in the upper edge area of the side wall (3), preferably opposite one another.

17. Reusable packaging container according to Claim 16, characterised in that the retaining device (20) comprises a rail element (21) which is substantially formed as an H-shaped profiled part and at least one retaining element of the intermediate base, wherein the upper edge area of the side wall (3) on the one hand, and the associated edge area of the extension part (15) on the other hand, are pushed into the H-shaped profiled part; and in that the rail element (21) comprises at least one engagement area for the retaining element, wherein the retaining element can be secured in the engagement area of the rail element (21) and is formed as an abutment surface for the intermediate base.

18. Reusable packaging container according to any one of Claims 9 to 17, characterised in that at least one wall section of the extension or, optionally, the intermediate base can be coupled to an edge area of the pallet which is formed as a base and can be used as a loading or unloading ramp.

19. Reusable packaging container according to any one of Claims 9 to 18, characterised in that the wall sections of the extension and, optionally, the intermediate base, can be folded together and can be stacked, together with the side wall and the lid, on the pallet, wherein the lid forms the upper closure of the stack.

20. Reusable packaging container according to any one of Claims 1 to 19, characterised in that at least one of the wall sections (5 to 8; 16) is provided with a label frame (22) and in that the pallet, the wall sections, and, optionally, the intermediate base and the lid are produced from wood, plastics material or metal and, optionally, has heat-insulating and/or sound-insulating properties.

## Revendications

1. Emballage réutilisable en forme de caisse, de préférence pour des machines, notamment pour des machines de bureau, avec une plaque de base (2) en forme de palette, avec une paroi latérale (3) composée de plusieurs portions de paroi (5 à 8) et avec un couvercle amovible (4) pouvant être placé sur la paroi latérale, dans lequel au moins deux portions de paroi (5 à 8) reliées par l'intermédiaire de charnières (9) peuvent être détachées ensemble de la plaque de base (2) et dans lequel la totalité de la paroi latérale (3) peut être repliée et peut conjointement avec le couvercle (4) être empilée sur la plaque de base (4), de sorte que le couvercle (4) constitue la clôture supérieure de la pile (10) ainsi obtenue,
caractérisé en ce qu'au moins l'une des portions de paroi (5) peut être détachée des autres portions de paroi et en ce que la portion de paroi qui est détachable des autres portions de paroi (6 à 8) est articulée de préférence à l'aide d'une charnière sur la palette, de telle sorte qu'elle peut être rabattue en rampe à volonté vers l'extérieur, ou vers l'intérieur sur la palette.

2. Emballage réutilisable suivant la revendication 1, caractérisé en ce que la portion de paroi (5) qui peut être séparée des autres portions de paroi (6 à 8) peut également être séparée de la palette (2) et est donc amovible.

3. Emballage réutilisable suivant l'une des revendications 1 et 2, caractérisé en ce qu'au moins une partie des portions de paroi (7, 8) peut être repliée par l'intermédiaire de charnières.

4. Emballage réutilisable suivant l'une quelconque des revendications de 1 à 3, caractérisé en ce qu'en tant que portions de paroi il est prévu une plaque frontale (5), une paroi arrière (6) et au moins une paroi latérale, de préférence une paroi latérale de droite et une paroi latérale de gauche (7, 8), la plaque frontale (5) pouvant être détachée des portions de paroi limitrophes (7, 8) et la paroi arrière (5) étant par l'intermédiaire de charnières (9) reliée à la paroi latérale, de préférence à la paroi latérale de droite et de gauche (7, 8) et pouvant, sous forme de bague d'emballage (12) être séparée et détachée au complet de la palette (2).

5. Emballage réutilisable suivant la revendication 4, caractérisé en ce que la plaque frontale (5) et la paroi arrière (6) ont sensiblement la même largeur que la palette (2) et le couvercle (4).

6. Emballage réutilisable suivant la revendication 4 ou 5, caractérisé en ce que la paroi latérale (7, 8) peut être reliée par l'intermédiaire de charnières (11).

7. Emballage réutilisable suivant l'une quelconque des revendications de 1 à 6, caractérisé en ce qu'une liaison amovible entre les portions de paroi (5 à 8) et la palette (2) est établie sous forme de liaison par enfichage, la palette (2) étant, dans les régions marginales prévues pour la liaison amovible avec les portions de paroi (5 à 8), dotée de lattes d'enfichage (13) de préférence de lattes crénelées, qui coopèrent avec les régions marginales correspondantes des portions de paroi (5 à 8).

8. Emballage réutilisable suivant l'une quelconque des revendications de 1 à 7, caractérisé en ce que la plaque de base en forme de palette présente des évidements pour la mise en place d'éléments de support et de remplissage, et en ce que le cas échéant des éléments de support et de remplissage différents en un matériau plastique poreux dimensionnés en fonction de la machine à emballer peuvent être enfichés dans les évidements de la plaque de base.

9. Emballage réutilisable suivant l'une quelconque des revendications de 1 à 8, caractérisé en ce que le couvercle (4) est muni de cornières (14) chevauchant les régions de l'arête supérieure de la paroi latérale (3), et en ce que les cornières (14) du couvercle (4) sont dimensionnées de manière telle qu'elles chevauchent au moins dans une large mesure les régions d'arête de la pile (10) formée par la palette (2), les parois latérales (3) ou les portions de paroi (5 à 8) et le couvercle (4).

10. Emballage réutilisable suivant l'une quelconque des revendications de 1 à 9, caractérisé en ce que la paroi latérale (3) peut, à l'aide d'un élément de surhaussement (15) constitué de portions de paroi (16) appropriées, être allongée ou rehaussée et en ce que les portions de paroi (16) de l'élément de surhaussement (15) peuvent de préférence être posés individuellement sur la paroi latérale (3).

11. Emballage réutilisable suivant l'une quelconque des revendications de 1 à 10, caractérisé en ce qu'à chacune des régions marginales des portions de paroi (5, 7, 8; 16) reliées de manière amovible il est associé au moins un élément de liaison (17) et en ce que les éléments de liaison (17) des différentes portions de paroi (5, 7, 8; 16) peuvent être mis en engagement par paires et peuvent être encliquetés mutuellement de préférence par glissement longitudinal.

12. Emballage réutilisable suivant la revendication 11, caractérisé en ce que l'élément de liaison (17) s'étend en continu le long de l'arête de liaison globale de la portion de paroi (5, 7, 8; 16) intéressée, les éléments de liaison (17) des portions de paroi (5, 7, 8; 16) mutuellement reliées constituant une arête (18).

13. Emballage réutilisable suivant l'une quelconque des revendications de 10 à 12, caractérisé en ce que les éléments de liaison (17) associés aux portions de paroi (16) de l'élément de surhaussement (15) présentent des prolongements (19) en saillie, de telle sorte que les portions de paroi (16) de l'élément de surhaussement (15) peuvent avec les éléments de liaison (17) associés ou avec les prolongements correspondants (19) être enfichés sur les régions d'arête supérieures de la paroi latérale (3).

14. Emballage réutilisable suivant l'une quelconque des revendications de 10 à 12, caractérisé en ce qu'à chaque liaison amovible entre deux portions de paroi voisines est associé un dispositif de verrouillage de préférence à commande manuelle.

15. Emballage réutilisable suivant la revendication 14, caractérisé en ce que le dispositif de verrouillage comprend au moins un élément de verrouillage pouvant être actionné et en ce que l'élément de verrouillage peut être placé dans une position de verrouillage dans laquelle il passe au moins partiellement à travers deux éléments de liaison en engagement et empêche de cette façon la suppression de l'engagement des éléments de liaison.

16. Emballage réutilisable suivant l'une quelconque des revendications de 9 à 15, caractérisé en ce qu'un plateau intermédiaire pour la clôture du volume enveloppé par la paroi latérale à l'égard du volume enveloppé par l'élément de surhaussement peut être mis en place, et en ce qu'au moins deux dispositifs de fixation (20) de préférence diamétralement opposés, pour le plateau intermédiaire sont disposés dans la région marginale supérieure de la paroi latérale (3).

17. Emballage réutilisable suivant la revendication 16, caractérisé en ce que le dispositif de fixation (20) est un élément en forme de rail (21) ayant sensiblement un profil en H et comporte au moins un élément de fixation pour le plateau intermédiaire, la région marginale supérieure de la paroi latérale (3) d'une part et la région marginale associée de l'élément de surhaussement (15) d'autre part étant glissées dans le profilé en H, l'élément en forme de rail (21) présentant au moins une région d'engagement pour l'élément de fixation, l'élément de fixation pouvant être verrouillé dans la région d'engagement de l'élément en forme de rail (21) et ayant la forme d'une surface de support pour le plateau intermédiaire.

18. Emballage réutilisable suivant l'une quelconque des revendications de 9 à 17, caractérisé en ce qu'au moins une portion de paroi de l'élément de surhaussement ou le cas échéant le plateau intermédiaire peut être accouplé à une région marginale de la palette ayant la forme d'une plaque de base et peut être utilisé en tant que rampe de chargement ou de déchargement.

19. Emballage réutilisable suivant l'une quelconque des revendications de 9 à 18, caractérisé en ce que les portions de paroi de l'élément de surhaussement et le cas échéant le plateau intermédiaire peuvent être repliés et peuvent conjointement avec la paroi latérale et avec le couvercle être empilés sur la palette, le couvercle constituant la clôture supérieure de la pile.

20. Emballage réutilisable suivant l'une quelconque des revendications de 1 à 19, caractérisé en ce qu'au moins une des portions de paroi (5 à 8; 16) est munie d'un cadre pour étiquettes (22) et en ce que la palette, les portions de paroi, le cas échéant le plateau intermédiaire et le couvercle sont fabriqués en bois, en matière plastique ou en métal et présentent le cas échéant des propriétés d'isolement thermique et/ou d'insonorisation.
